Europäisches Patentamt

European Patent Office

Office européen des brevets

(11) Publication number: **0 448 063 A1**

# EUROPEAN PATENT APPLICATION

(21) Application number: 91104290.1

(22) Date of filing: 20.03.91

(51) Int. Cl.⁵: **B29C 67/22,** B32B 5/28,
C08J 5/04, //B29K75:00,
B29K105:04,B29K105:12,
B29L31:58

(30) Priority: 20.03.90 US 496211

(43) Date of publication of application:
25.09.91 Bulletin 91/39

(84) Designated Contracting States:
DE FR

(71) Applicant: HOOVER UNIVERSAL INC.
49200 Halyard Drive
Plymouth, Michigan 48170(US)

(72) Inventor: Walker, John E.
360 Burr Oak
Ann Arbor, Michigan 48103(US)
Inventor: Sha, Anantkumar Ramniklal
19 Twin Brooks Drive
Willow Grove, Pennsylvania 19090(US)
Inventor: Bertoia, Richard J.
13631 Spencer Road
Milford, Michigan 48042(US)

(74) Representative: Hoeger, Stellrecht & Partner
Uhlandstrasse 14 c
W-7000 Stuttgart 1(DE)

(54) **Fibrous reinforced article and method for preparing same.**

(57) The invention relates to fiber reinforced urethane foam materials and process for preparing such materials. The urethane foam is reinforced with a preform (26) made from a select class of fibrous materials made non-flat by random or semi-random orientation. The fibrous reinforcing skeletal material is substantially completely encapsulated or embedded in the cured foam system and occupies at least 10% of the maximum or mean thickness of the finished uncompressed article. The methods of the present invention relate to steps of (1) providing a urethane mold (10) with at least one cavity; (2) placing a three dimensional random or semi-random fibrous preform (26) securely in the mold; (3) adding a urethane foam system; and (4) foaming the preform in place to create a unitary foam article. The materials provided by the processes of the present invention are particularly useful in furniture, bedding and other environments where reinforced flexible urethane foam is employed.

Fig-1

## BACKGROUND AND SUMMARY OF THE INVENTION

The present invention relates to reinforced foam materials or articles adaptable for use in many environments; the present invention also relates to the processes and methods for preparing these materials and articles. The reinforced foam materials or articles of the present invention are especially useful in the furniture and seating industries, and in particular in vehicle seating applications for automobiles, trucks, motorcycles, ATV's, snowmobiles, aircraft, farm equipment, and the like. Reinforced foam articles of the present invention are also useful in other furniture and bedding applications, e.g., mattresses; office and home furniture; and other foam cushion-containing devices.

In a highly preferred embodiment, this invention is directed to reinforced foam materials which provide varying degrees of resilience, or resistance to compression, as a result of the selective incorporation and positioning of certain types of random or semi-random three-dimensional reinforcing fibrous material.

In the automotive industry, as well as many other industries, there is a constant need for improved, low-cost, reliable and easily produced foam materials to be used in seating components. Such materials must provide comfort for the user, but at the same time must be durable over the life of the product, and have been recently required to provide part or all of the structural integrity necessary in such applications.

Due to its unique ability to provide very soft, comfortable surfaces, low density, flexible urethane foam has long been an integral part of the bedding (mattress) and furniture (seating) industries. However, the very properties which make low density urethane foams highly desirable from a comfort standpoint also impose great limitations on its integrity, durability, structural strength, and the like.

The prior art discloses many efforts at producing an improved urethane foam for seat construction which attempt to balance comfort with needed integrity, strength, durability and ultimately cost. Typical art-disclosed attempts involve employing a host of reinforcing materials, both within the cured urethane foam itself or in combination with the cured urethane. For example, it has been very common to provide either woven or non-woven flat "fabric"-type materials or scrims on at least one surface of the foam either during or after curing. However, such layered-type inclusions of scrims do not change the ultimate density or compressibility of the integral foam block; there have also been problems associated with the ability to durably adhere such scrim materials to the open cell urethane foams.

Similar efforts have been made to attempt to improve low-density flexible urethane foam by creating a composite or layering affect. Typically in such applications, a reinforcing or stiffening material or scrim is placed between two or more layers of foam; similar composites are also created by combining two or more types and densities of foams, either joined directly together or joined with a reinforcing scrim or layer between them.

A third approach commonly disclosed in the art includes an effort to internally reinforce a single piece of unitary foam structure by molding the foam around a reinforcing preform or scrim. However, these art-disclosed preforms have been composed of either non-random repeating-type units of non-fibrous materials, such as exploded cured foams, or random, two-dimensional fibrous components, such as a polypropylene scrim.

Specific examples of the three various types of approaches described above are as follows.

U. S. Patent No. 3,840,269 issued October 8, 1974 (Ambrose) discloses a relatively thin, regular, non-random lattice reinforced foam rubber seat bun and method of molding same. A reinforcing lattice, preferably made of stretch oriented polypropylene, or other polymerized resinous plastics fluoridated hydrocarbons. A foamable plastic-like or rubber-like material is inserted into a mold with the lattice, and is allowed to foam and mold into shape.

U. S. Patent No. 3,833,454 issued September 3, 1974 (Ambrose) discloses a reinforced foam plastic seat bun and method of molding the same in which a flat reinforcing sheet of organic fiber material, preferably polyproylene plastic, is embedded in a foam plastic material. Preferably the fibers are polyproylene plastic.

U. S. Patent No, 4,264,386 issued April 28, 1981 (Sears Jr. et al.) discloses a method for molding a cloth in a hot mold and molding a cloth covered foam filled product. (This is not a fiber-reinforced product.) A cloth is preheated in a mold. The cloth conforms to the contours of the mold, after which polyurethane foam is injected into the mold and allowed to expand to form a seat cushion. The polyester cloth layer is an exterior layer.

U. S. Patent No. 4,792,576 issued December 20, 1988 (Nodelman) discloses the production of polyurethane moldings by a reaction injection molding process. Reinforcing fiber matts are disclosed to enhance the flexural modulus of RIM parts. The reinforcing fiber matts include polyester matts.

U. S. Patent No. 4,372,900 issued February 8, 1983 (Doerfling) discloses a method forming a foam structure reinforced with fiberglass, preferably including a cover sheet, such as cloth or carpet, for use in automotive applications. A thermosetting resin is impregnated into a mass of woven glass fibers. After allowing the resin to foam and expand, it is placed in a contoured die and molded.

U. S. Patent No. 4,330,494 issued May 18, 1982 (Iwata et al.) discloses a reinforced foam resin structural material and process for manufacturing the same. The reference broadly suggests the use of synthetic fiber reinforcement for a foam structure such as polyurethane. Additionally, the reference discloses a variety of forms for the reinforcing material, and particularly the dimensions of the fibers. The most preferred fibers are glass fibers employed in a matte form.

U. S. Patent No. 4,036,923 issued July 19, 1977 (Saidla) discloses a method for forming large reinforced foamed plastic panels. A particular combination of glass fiber reinforced foamable plastic is disclosed.

U. S. Patent No. 4,115,170 issued September 19, 1978 (Sanson) discloses a cushion or seat structure of plastic foam with integrated cover and incorporated reinforcing grid or skeleton, and method of making the same. Various reinforcing structures are disclosed.

U. S. Patent No. 3,531,552 issued September 29, 1970 (Getz et al.) discloses a method of making a composite load supporting structure, particularly a molded seat cushion. In Column 3, the use of organic fiber materials as a preformed reinforcing material insert for use with a polyurethane foam material. The insert is molded onto a face of the polyurethane foam.

U. S. Patent No. 3,875,275 issued April 1, 1975 (Lemelson) discloses a method for molding a composite body such as a shell-like body with a reinforcing member or frame extending through the body and supported by the walls of a mold.

U. S. Patent No. 3,082,486 issued March 26, 1963 (Khawan et al.) discloses a method of molding a reinforced foam article including polyurethane mattresses, cushions and the like.

In view of the above, it will be appreciated that the present invention relates to fiber reinforced urethane foam materials; the process for preparing such materials; and the articles prepared by the process.

In particular, the present invention relates to a flexible urethane foam article reinforced with a preform made from a select class of preforms made non-flat by random or semi-random fibrous reinforcing materials.

The articles and processes of the present invention employ, without limitation, at least two basic components: (1) a flexible urethane foam or foam system and (2) a non-flat, fibrous reinforcing skeletal material or preform which is substantially completely encapsulated or embedded in the cured foam system and which occupies at least 10% of the maximum or mean thickness of the finished, uncompressed article.

The methods of the present invention relate to steps of (1) providing a urethane mold with at least one cavity; (2) placing a three-dimensionally random or semi-random fibrous preform securely in the mold; (3) adding a urethane foam system; (4) and foaming the preform in place to create a unitary foam article.

As also noted above, the materials provided by the processes of the present invention are particularly useful in furniture, bedding and other environments where reinforced flexible urethane foam is employed.

## DESCRIPTION OF THE DRAWINGS

Additional objects and advantages of the present invention will become apparent from a reading of the description of the invention which makes reference to the following set of drawings in which:

FIG. 1 is a side cross-sectional view of a molding apparatus for producing fiber reinforced urethane foam materials in accordance with the present invention;

FIG. 2 is a top view of the molding apparatus shown in FIG. 1;

FIGS. 3A-C are views, partially in phantom, of a urethane foam seat cushion incorporating a reinforcing skeletal preform material in accordance with a preferred embodiment of the present invention;

FIGS. 4A-C are views of a urethane foam seat back incorporating a reinforcing skeletal material adapted to be used in conjunction with the seat cushion shown in FIGS. 3A-C, in accordance with the present invention;

FIGS. 5A-C are views of a urethane foam seat cushion incorporating a reinforcing skeletal material for edge stiffening in accordance with another preferred embodiment of the present invention;

FIGS. 6A-C are views of a urethane foam seat back incorporating a reinforcing skeletal material for edge stiffening adapted to be used in conjunction with the seat cushion shown in FIGS. 5A-C;

FIGS. 7A-C are views of a urethane foam seat cushion incorporating a reinforcing skeletal material along side wing portions of the cushion in accordance with a further preferred embodiment of the present invention;

FIGS. 8A-C are views of a urethane seat back incorporating a reinforcing skeletal material along its side portions, adapted to be used in conjunction with the seat cushion shown in FIGS. 7A-C;

FIG. 9 is a graph of the results of an indentation force deflection test performed on a sample of fiber reinforced urethane foam produced in accordance with the present invention, and having a reactive index of 95;

FIG. 10 is a graph of the results of an indentation force deflection test performed on a sample of fiber reinforced urethane foam produced in accordance with the present invention having a reactive index of 100;

FIG. 11 is a graph of the results of an indentation force deflection test performed on a sample of fiber reinforced urethane foam produced in accordance with the present invention, and having a reactive index of 105; and

FIG. 12 is a graph of the results of an indentation force deflection test performed on a sample of fiber reinforced urethane foam produced in accordance with the present invention, and having a reactive index of 108.

## DESCRIPTION OF THE INVENTION

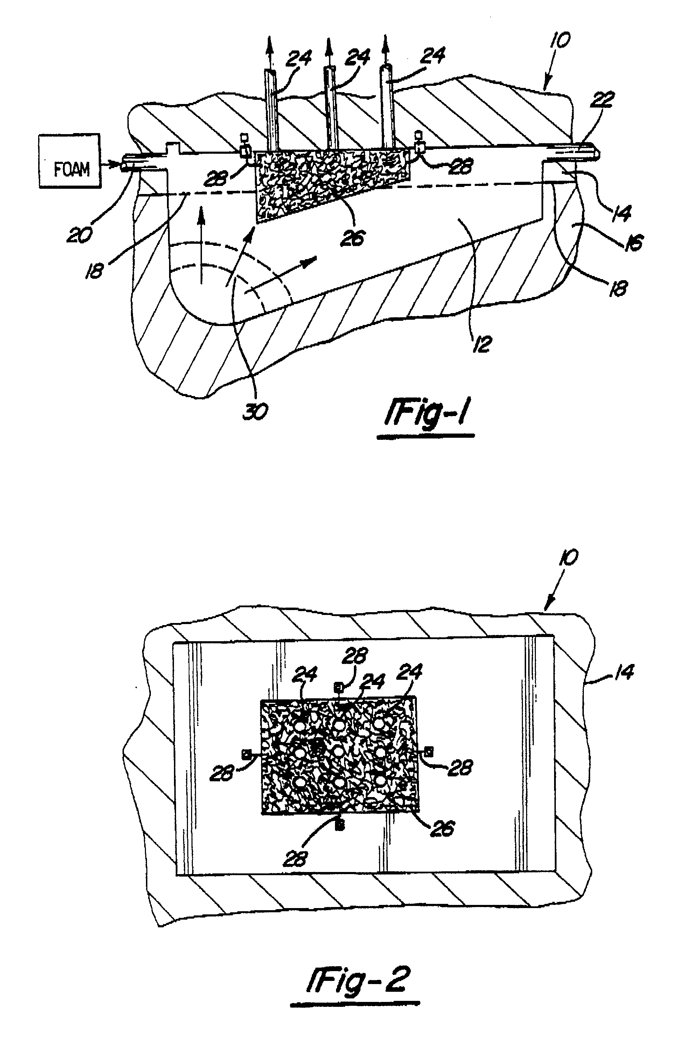

With reference to FIG. 1, there is illustrated a molding apparatus 10 which may be applied to the teachings of the present invention. It will be appreciated by those skilled in the art, however, that the molding apparatus 10 is only exemplary of a wide variety of molding systems which may be utilized for producing reinforced urethane foam products in accordance with the present invention. For example, while molding apparatus 10 depicts a "port pour" mold, it will be appreciated that an "open mold" apparatus may also be employed. With this in mind, the molding apparatus 10 generally comprises a mold cavity 12 formed by an upper mold half 14 and a lower mold half 16, which are removably joined together in a conventional manner at interface 18. The molding apparatus 10 is adapted to produce a urethane foam bun product such as a seat cushion, or bun. The molding cavity 12 is inverted so that the lower mold half 12 molds the upper half 14 of the unitary, one-piece bun and the upper mold half 14 produces the lower half of the unitary, one-piece bun.

An inlet port 20 is provided in the upper mold half 14 to permit the liquid urethane foam to be admitted into the chamber 12. An outlet port 22 is also provided in the upper mold half 14 to permit the escape of excess urethane foam during expansion. A plurality of air vents 24 are positioned in the upper mold half 14. These vents 24 are located adjacent to and preferably in communication with a reinforcing fibrous skeletal material, or preform 26. The preform 26 may be suspended by any suitable means within the upper mold half 14. For example, an anchoring means may comprise a plurality of small horizontally spaced hooks 28 inserted into the upper mold half 14 for engaging the edges of the preform 26. The hooks 28 are preferably constructed of metal and are removed from the molded article. Alternatively, they may be constructed of suitable plastic and permanently retained to form an integral part of the molded article. As shown more clearly in FIG. 2, a series of four hooks 28 are utilized to suspend the preform 26 on each of its four sides.

The reinforcing preform 26 or the present invention is preferably substantially completely encapsulated or embedded within the cured flexible urethane foam. This preform 26 differs from ones conventionally employed in the prior art in several important respects.

Conventionally-reinforced articles, such as those disclosed in U. S. Patent No. 3,833,454, issued to Ambrose on September 3, 1974, are reinforced with randomly oriented fibers; however, the random orientation of these fibers is in two dimensions only. Thus, the reinforcing material is a flat sheet-like material. Ambrose therefore discloses a "thin sheet" of non-woven, randomly oriented fibrous fabrics formed preferably from polypropylene fibers bound together in a spaced apart relationship. This is also typical of the reinforcing "scrims" (discussed above in the Background section) that have been employed in the art as an element of a laminated product. Such preforms are too flat to provide the benefits of the present invention, i.e., lack the required thickness of the fibrous preforms of the present invention.

Other conventionally employed reinforcing materials which may provide the required thickness appear to include only non-fibrous materials, such as other precured urethane foams; non-fibrous materials do not provide either the strength of fibrous materials or the necessary voids or interstices. None of these provide the random or semi-random fibrous preform structures necessary for the present invention, i.e., they do not provide the necessary three-dimensional voids or interstices which are capable of being filled with urethane foam. The art-disclosed non-fibrous preforms, such as pre-cured urethane foams, also appear to lack the rigidity or stength necessary to provide the desired result.

In contrast, the present invention employs a reinforcing fibrous material creating a non-flat, thicker preform 26 which acts as a three-dimensional "skeleton" for at least a part of the finished or cured foam structure.

In addition, conventionally reinforced urethane materials such as those disclosed above, typically have

4

their reinforcement continuously throughout a cross-section of the foam products. In the present invention, however, three-dimensional sections or blocks of reinforcing preforms 26 may be located in any position and orientation throughout the mold cavity 12 to achieve the desired compression characteristics. These types of reinforcing preforms, accordingly, allow the artisan to vary compression characteristics of various parts of a unitary structure by use of multiple preforms in the same article.

Accordingly, the present invention employs a urethane-foam three-dimensional preform 26 comprising random (in three dimensions) fibers bonded together, or semi-random continuous spun fiber loops, which yields a preform that is not flat either in the mold or in the finished article. By "not flat" or "non-flat" as used herein, it is meant that the three-dimensional skeleton preform has a thickness of at least 10% of the average (mean) or maximum mold or article thickness.

The range of reinforcing thickness, as can be seen from Figs. 3A-C through 8A-C (discussed below) can be in the range of from about 10% to 100% of the maximum or average mold or article thickness. Preferred ranges will, of course, depend upon the environment and application of the final product, and may even vary throughout a singly, unitary product. Depending upon the final application of the cured article, thickness ranges could include, for example, about 20% to about 100%; about 20% to about 50%; about 20% to about 90%; about 20% to about 80%; about 50% to about 90%; about 50% to about 80%; or other similar ranges.

It will be appreciated that by employing a three-dimensional preform 26 in the above ranges, the compression characteristics of the foam product may be altered with respect to forces exerted in more than one dimension. For example in some applications, (discussed below) the preform can be used to increase stiffness with regard to vertical and lateral forces as wall. Reinforcing preforms which are primarily two-dimensional and therefor lack randomly positioned three-dimensional voids or interstices can not generally be used to control the response to forces in three dimensions.

Three-dimensional, non-fibrous preforms, in many situations, likewise appear to lack the ability to control the response to forces in three dimensions.

The reinforcing preform 26 preferably comprises random (in three dimensions) fibers bonded together, or alternatively, continuous spun fiber loops forming a three-dimensional, preferably semi-random, configuration. The preform 26 may preferably be selected from the group consisting of: short fibers bonded together in a three-dimensional configuration, such as chopped glass or coconut fibers bound together; polyester-type fiber fill; or continuous-strand spun polyester resin-like materials such as those made from polyethylene terephthalate (PET); mixtures or such materials may also be employed. Highly preferred materials include three-dimensional skeletons 26 made from continuous-strand spun PET; polyester fiberfill; and other spun polyesters and polyester resins such as poly(ethylene 2,6-naphthalenedicarboxylate) ("PEN"). Polyester amides, such as polyhexanethylene adipamides, may also be employed. Commercially available materials that are highly preferred include those manufactured by Kodak as 80% 100 denier Kodel 442 bonded with 20% 0.5 denier Kodel 410 binder.

Other preferred skeletal preforms include those made from a material manufactured by Americo Corp as a blend of 200, 300 and 400 denier polyesters, formula #200.

The skeletal preform 26 is, in general, available in a rolled or block form and is cut to the desired shape. Such fiber materials are preferably weighted by denier, which specifies the fineness of the material. It will be appreciated that the lower the denier number the finer the fiber. It should be noted that while lower denier preforms 26 will yield higher stiffness in the resulting product, if the denier number of the material selected to create the preform is too low, the urethane foam will not easily or completely penetrate the preform 26. Thus, while other materials may work, it is preferred that the preform 26 be comprised of a fibrous material which has a denier in the range of 200 to about 500. It will, of course, be appreciated by the skilled artisan in light of the teachings of this disclosure that the selection of the particular fibers to create the preforms, the binder material used, and the preform's other properties (such as denier designation) will depend upon many factors which are well known to the skilled artisan in light of the current teachings, such as the intended use of the finished foam, the foam selected, and the like. For example, it will be appreciated that the preferred synthetic materials will have fairly high modulus of elasticity.

In general, the preform 26 is substantially completely encapsulated and embedded within the cured urethane foam product. In particular, urethane liquid is initially injected into the cavity 12 containing the preform 26 through the inlet port 20. Injection systems (not shown) generally comprise two kinds, high pressure and low pressure systems. In low pressure systems the urethane is simply mixed with a beater and forced through the inlet port 20. In high pressure systems the urethane is, maintained at a relatively high pressure and then is injected as a spray into the low pressure chamber 12. Typical injection systems are available from companies including Mobay, Admiral and Elastogram. As noted above, however, open mold systems may be employed.

FIG. 1 shows a volume of urethane foam 30 after it has been placed into the chamber 12. Various methods are available to cause the expansion of the urethane foam 30. In the preferred embodiment, the urethane foam 30 generates a gas, such as $CO_2$, in situ as a byproduct of the chemical condensation or curing reaction. However, chemical blowing agents, such as inert halogenated alkines, may also be employed. Exemplary prepolymer chemical formulations arc described below. This chemical reaction causes the foam 30 to rapidly expand, filling the chamber 12 with the excess escaping through the outlet port 22. During this process, the foam 30 seeps into the voids or interstices of the preform skeleton 26 and, in the process, displaces air within the fibrous material of the preform 26.

It has been found that the vents 24 greatly facilitate the absorption of the urethane 30 into the area of the mold containing the preform 26 by permitting the gasses trapped within the voids or interstices of the preform 26 to expeditiously escape as the urethane 30 expands. The exact number and size of the vents 24 will depend upon the particular application, but they should be sufficient to permit the escape of air rapidly enough to allow all of the air within the fibrous skeleton 26 to escape during the expansion of the urethane 30. It should be noted that without the vents 24, or with insufficient vents, or if the vents are not placed in communication with the area occupied by the preform, it is possible for air to be trapped within the voids or interstices of the fibrous skeleton 26 which would cause undesirable non-cell-containing voids within the finished product; these voids would dramatically effect the load bearing performance in those areas. As noted above a further important consideration is that the vents should be located in a manner than allows air to escape from all areas behind the fibrous material with respect to the direction of foam expansion. Thus, in general, the vents 24 should be located in a position where they will be opposite the expanding mass of urethane foam 30.

Referring now to FIGS 3A-C, a finished urethane foam seat cushion bun 32, in accordance with the present invention, is shown. The bun 32 comprises the bottom seat cushion of a typical bucket seat for use in a vehicle. FIG. 3A shows this seat 32, viewed from the bottom. A skeletal preform 34 is shown imbedded within the bun 32 in the front thigh portion to provide "antisubmarining" support for the occupant. This skeletal preform 34 generally will comprise about 10% to 50% of the thickness of the finished bun 32. In particular, the fibrous preform 34 provides a compression gradient giving greater stiffness and load bearing capabilities in that portion of the seat.

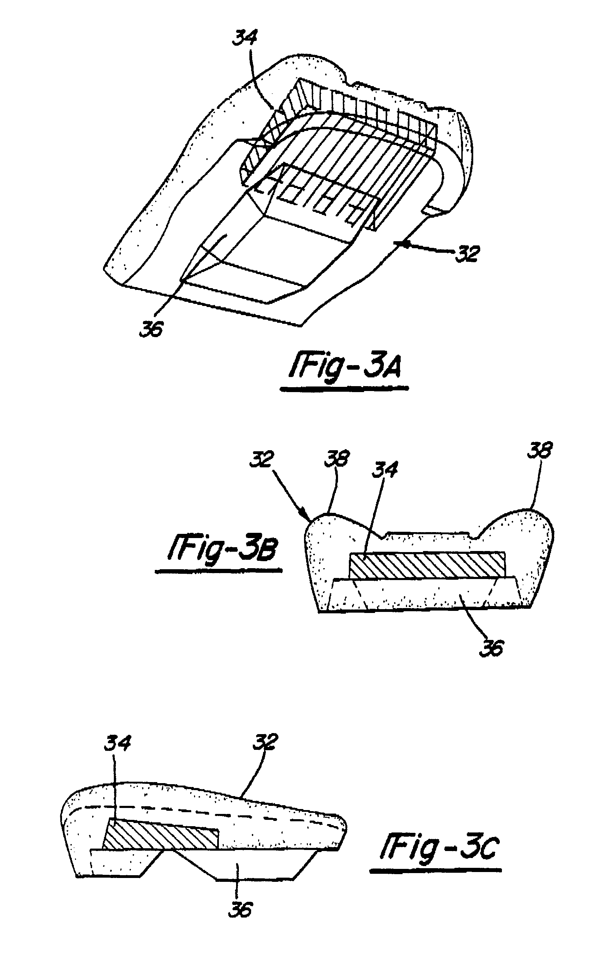

Adjacent to the skeletal preform 34 is a protruding portion 36 which provides additional padding where the loading is typically the greatest. However, in this center portion it is desired to provide this support in a more comfortable, less stiff cushion, so that the skeletal preform 34 is not used in this area. Thus, the present invention provides a seat cushion with firmness and support characteristics that vary throughout its usable area. In this way, the support characteristics of different areas of the seat can be tailored to desired ergonomic characteristics in a single integral seat bun. FIG. 3B is a front view of the bun 32 showing the side wings 38 as well as the skeletal preform 34 and protruding portion 36. FIG. 3C is a side view of the bun 32.

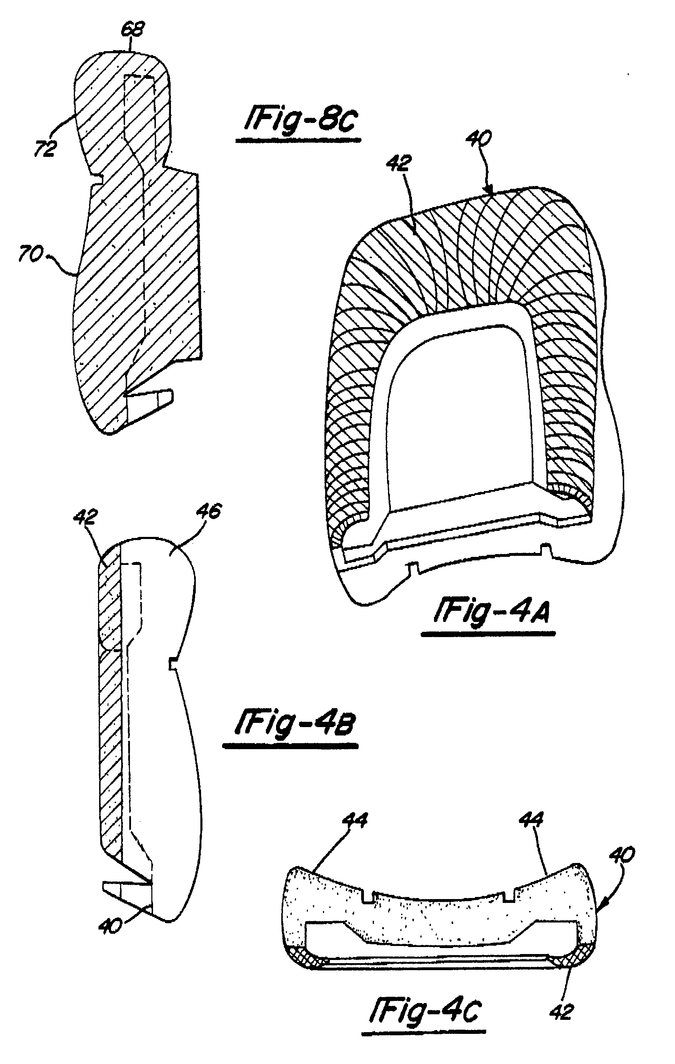

Referring now to FIGS. 4A-C, there is shown the rear portion of a seat back 40 adapted to be used in conjunction with the seat cushion 32 shown In FIGS. 3A-C. The seat back 40 includes a skeletal preform 42 at its rearward surface. It will be appreciated that the curved shape of the preform 42 is due to the contours of the mold utilized in manufacture, and that the preform 42 will bend and conform to the contours of the mold to create the desired shape. As shown in FIG. 4C, when viewed from the bottom, the seat back 40 includes vertically disposed side wings 44 to provide side support to the back of the occupant. It can be seen in FIG. 4B that forces exerted normal to the surface of the side wings 44 will be resisted by the curved surface of the preform 42. Thus, the preform 42 provides added structural rigidity to the side wings 44.

Referring now to FIG. 4B, a side view of the seat back 40 is shown. Seat back 40 includes a headrest portion 46. Preform 42, being disposed behind the headrest 46 will also provide additional structural rigidity to the headrest 46. Thus, it can be seen that the preform 42 provides additional rigidity for the seat back 40 in precisely areas where it is needed without requiring the addition of a separate supporting structure since the preform 42 is integral with the bun 40. In addition, it can be seen that the preform 42 provides this added rigidity without significantly increasing the bulk of the entire seat back 40. In this way, the preform 42 provides a less bulky means for incorporating the required stiffness into the seat back 40 than would be required if the bun were simply made thicker in the required areas.

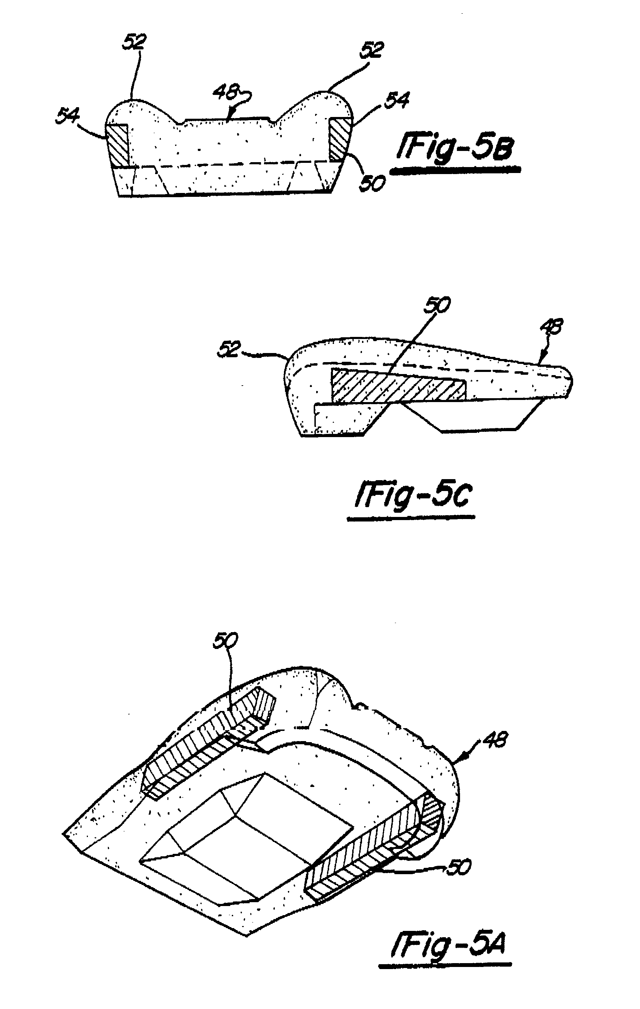

Referring now to FIGS. 5A-C, there is shown a seat cushion bun 48 that is similar to the cushion 32 shown in FIGS. 3A-C except that the preform 34 has been replaced with a pair of wing preforms 50 in the wing portions. It will be appreciated that while they are shown separately for the sake of illustration, the preform wings 50 could be incorporated into the same seat as the antisubmarining preform 34, shown in FIG. 3A. The side wing preforms 50 which are embedded into the wings 52 of the seat cushion 48 give added strength and stiffness to the wings 52 to resist lateral forces as may be experienced by an occupant in a vehicle during hard turns. It should be noted that the preform 50 will conform to the curved surfaces 54 of the side of the wings 52 during the molding process.

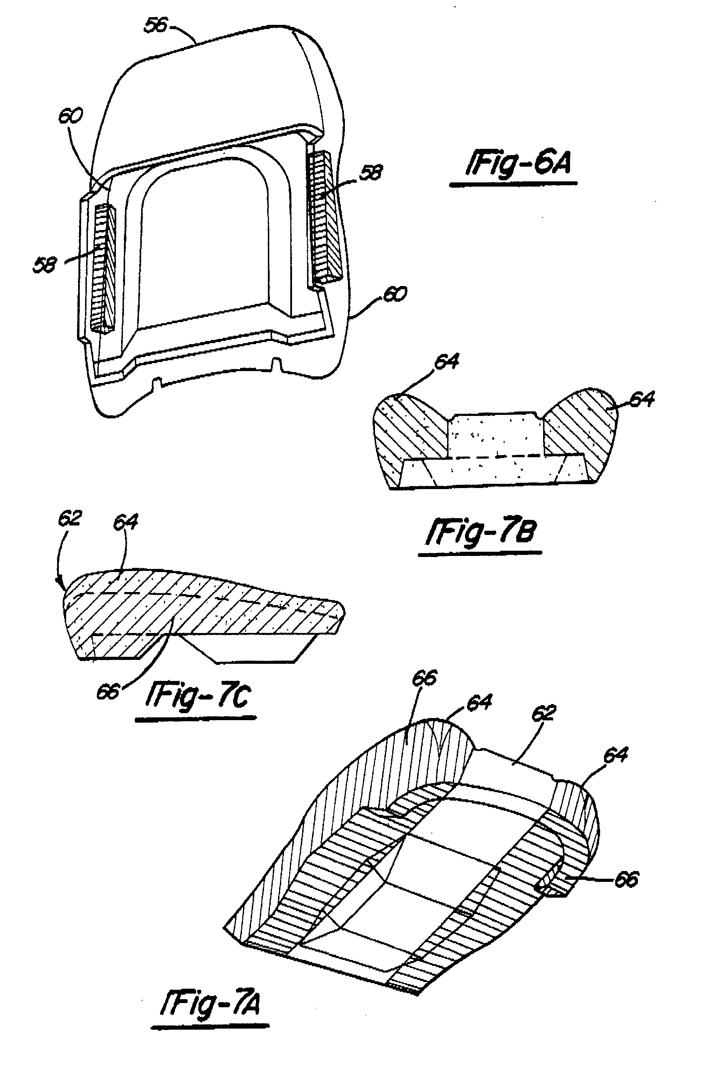

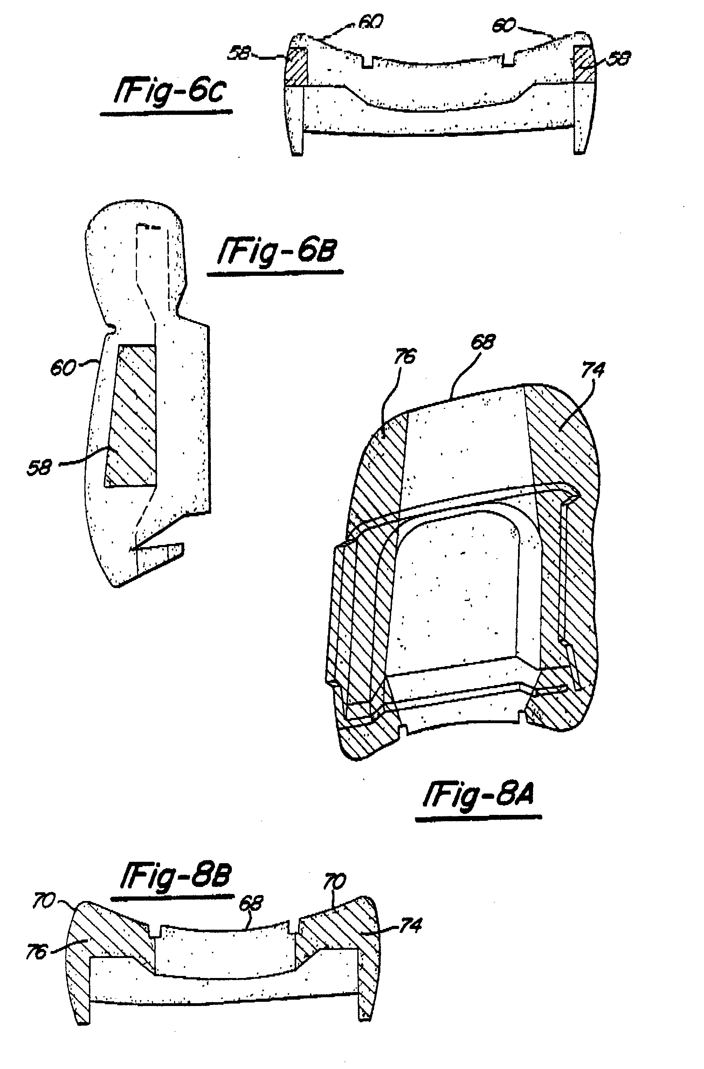

Referring now to FIGS. 6A-C, a seat back 56 in accordance with the present invention, is shown. The seat back 56 utilizes a pair of preforms 58 inside the side wings 60 of the seat back 56. The preforms 58 in FIGS. 6A-C will provide the wings 60 with additional stiffness and support to resist lateral forces exerted by the occupant such as may be experienced during turns. It should be noted that the preforms 50 and 58 shown in FIGS. 5A-C and 6A-C, provide additional support where it is needed without the addition of external supporting members and without the adding excess bulk to the seat.

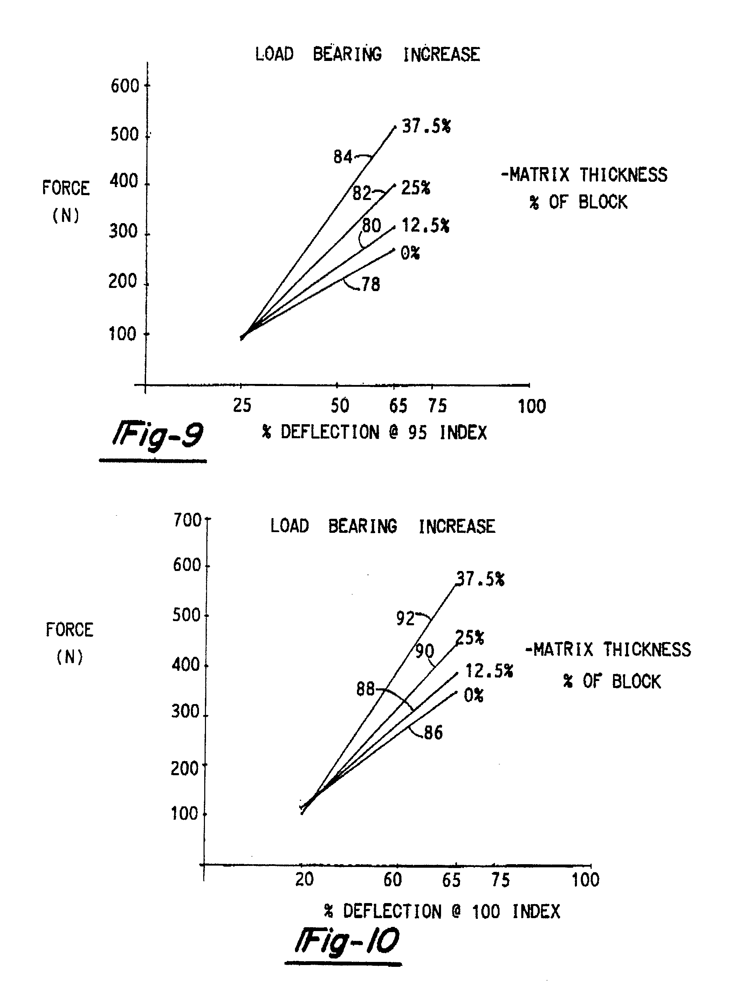

FIGS 7A-C and FIGS. 8A-C provide an alternative approach to edge stiffening over that used in FIGS. 5A-C and 6A-C. In general, FIGS. 7A-C and 8A-C use larger areas of skeletal preform to provide a much greater degree or edge stiffening. In particular, FIGS 7A-C and 8A-C provide a "dual density" or "dual stiffness" cushion, with side portions having up to 100% of their thickness reinforced with a preform while the center portion uses no preform. On the other hand, the embodiments shown in FIGS. 7A-C and 8A-C will provide a relatively stiff surface feel on the side reinforced areas as compared to those in FIGS. 6A-C. This characteristic is sometimes quantified as an Initial Hardness Factor which is defined as the ratio of the 25% indentation forced deflection to the 5% indentation force deflection.

In more detail, FIG. 7A shows a urethane foam seat cushion 62 with side wings 64 that are substantially filled with a pair of skeletal preforms 66. Similarly, FIGS. 8A-C illustrate a seat back 68 which includes side wings 70 and headrest 72 that are substantially, filled with preforms 74, 76. It should be appreciated that the seat cushion 62 shown in FIGS. 7A-C and the seat back 68, shown in FIGS. 8A-C provide relatively softer support in the center section where most of the occupants weight resides, and provides significantly greater support on the side and headrest portions. This is accomplished without the addition of external supports to the one piece bun and without significantly increasing the size and bulk of the bun.

Referring now to FIGS. 9-12, a series of graphs showing the results of Indentation Force Deflection tests on foams made according to the present invention are shown. These tests were performed on urethane foam samples manufactured using a high pressure mixing metering system. The reinforcing preform was made of spun fibers of PET. The Indentation Force Deflection test, in general, consists of measurements of the force necessary to produce 25 and 65% indentations in a foam product. The test is generally performed using an apparatus having a flat circular indentor foot connected by means of a swivel joint capable of accommodating the angle of the sample to a force-measuring device and mounted in such a manner that the product or specimen can be deflected at a speed of 0.4 to 6.3 mm/s. The specimen is supported on a level horizontal plate that is perforated to allow for rapid escape of air during the test. In general, the indentation is made at the center of the article. The area to be tested is usually preflexed and allowed to rest after the preflex. The thickness of the specimen after applying a contact force of 4.5N is determined and then the specimen is compressed to 25% of this thickness and the force observed in Newtons after about one minute. Without removing this specimen, the force is then increased to 65% deflection and is maintained for about one minute before a reading is taken.

The Indentation Force Deflection test results are known as IFD values. The IFD values are useful to calculate a number of useful factors and indexes including the Support Factor which is equal to the 65% IFD divided by the 25% IFD; the Guide Factor, Initial Hardness Factor, Hardness Index, etc. Further details of the Indentation Force Deflection test can be found in the American Society For Testing Materials (ASTM) publication D-3574-86, entitled "Standard Methods for Testing Flexible Cellular Materials-Slab, Bonded, and Molded Urethane Foams" which is hereby incorporated by reference.

Referring now to FIG. 9, a set of Indentation Force Deflection test results are shown for a urethane foam sample produced from a material having Reactive Index ratio of 95. This ratio, (the Reactive Index) may also determine the stiffness of the urethane foam. In general, the higher the reactive index, the stiffer is the foam.

The first curve 78, shows the results of a sample of 95 index foam without any skeletal preform 26. The next curve 80 shows the results of the Indentation Force Deflection test utilizing a sample having a 95 reactive index and also incorporating a skeletal preform 26 that comprises 12.5% of the total thickness of the urethane foam block tested. It can be seen from curve 80 that the skeletal preform 26 has relatively little effect on the deflection up to about 25%, and that this effect increases as the deflection increases. At 65% deflection, the preform 26 results in an increase in force from about 275N to about 320N, a 16% increase. These are measurements of the verticle indentation force, i.e., measured through the thickness of the foam.

Curve 82 indicates the results for a sample having its skeletal preform 26 comprise 25% of its thickness while curve 84 indicates the results with a sample having a skeletal preform 26 throughout 37.5% of its thickness. It should be noted that even with 37.5% preform thickness, curve 84 indicates that little or no effect is observed on the force required to deflect the sample by 25%. At the same time, curve 84 indicates

7

that the force required to deflect the sample 65%, has increased from 275N to 520N, an 89% increase. Thus, while the Support Factor is greatly increased in curve 84 over curve 78, little change will be observed in the Initial Hardness Factor.

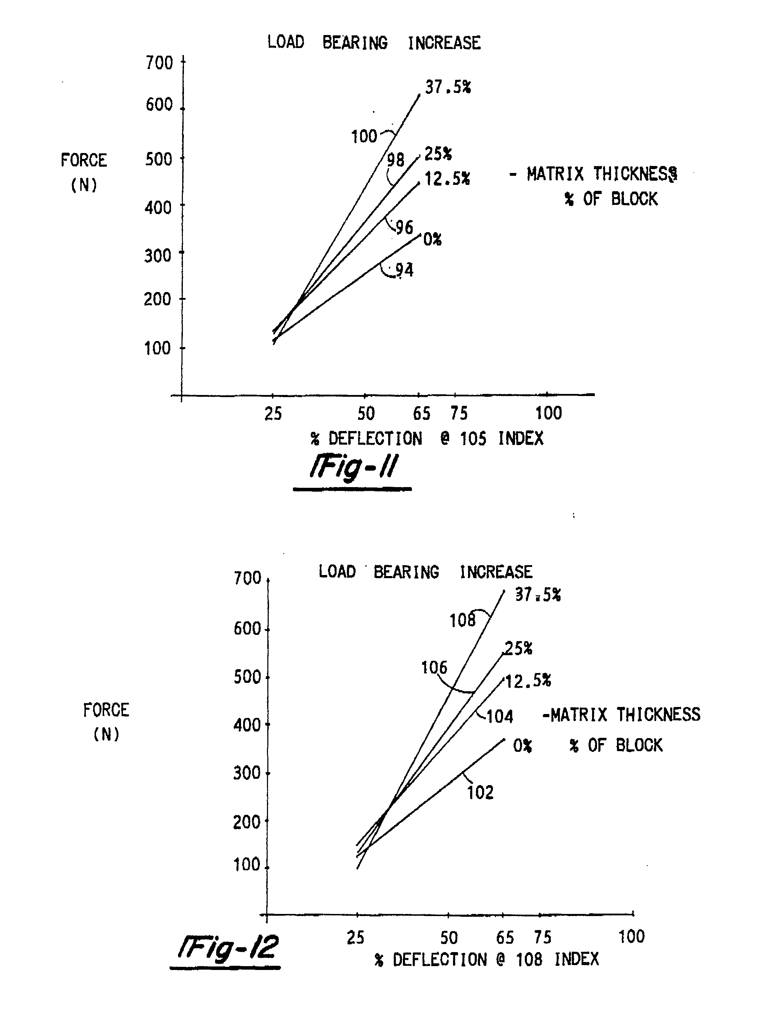

Referring now to FIG. 10, curves 86, 88, 90, 92 indicate the results of the Indentation Force Deflection test on a sample produced with urethane having a reactive index of 100. In FIG. 11, curves 94, 96, 98, 100 show the results for a sample produced having a reactive index of 105, while in FIG. 12, curves 102, 104, 106, 108 give the results for samples having a reactive index of 108. From these curves, it can be seen that as the reactive index gets larger, there is a more noticeable effect on the 25% deflection point than with lower reactive index materials. As expected, however, the higher index results in a stiffer urethane foam and shifts the curves upward since larger forces are required to deflect the sample.

As is evident from the curves in FIGS. 9-12, the skeletal preform 26, in accordance with the present invention, gives the designer a powerful means to fine tune the stiffness and support characteristics of a seat, or any site within a unitary seat cushion. A desired 65% deflection force can be readily achieved without effecting the 25% deflection force. In addition, utilizing the present invention, the stiffness and support characteristics throughout a single integral bun can be easily varied in any manner desired simply by the choice of the precise location and thickness of the skeletal preform 26. Moreover, the support characteristics of a cushion in response to forces in three dimensions can be controlled by applying the teachings of the present invention. That is, by selecting the size, index and placement of the preform, a set of desired force deflection curves in response to lateral as well as vertical forces may be achieved in a single cushion. Further, these characteristics can be achieved without significantly effecting the size and shape of the seat and without the addition of external support members.

The flexible urethane foams and foam systems useful in the practice of the present invention include low density urethane (foams have a density to about 0.8 to about 1.2 pounds per cubic foot); intermediate density foams (foams having a density of about 1.2 to about 3 lbs/cu ft); and high density or high resilience (HR) foams (foams having a density of about 3 to about 6 lbs/cu ft). In some environments, semi-flexible foams of about 6 to about 12 lbs/cu ft may also be employed.

Flexible urethane foam systems useful in the present invention are preferably pre-polymer systems and typically employ two basic components (1) an isocyanate and (2) a polyol; the systems are typically water-activated or water-curable systems.

The isocyanates useful in the present invention include TDI (tolylene disocyanate); MDI (methylene disocyanate); and high density or polymeric isocyanates (PMDI); mixtures of these isocyanates may also be employed.

The selection of the precise isocyanate or isocyanate mixture will, of course, depend upon the particular application. However, in the manufacture of vehicle seating, TDI systems are preferred. Highly preferred systems include the 80/20 TDI systems, i.e., with the 80/20 referring to the ratio of isomeric 2,4-diisocyanate to the 2,6-tolylene diisocyanate.

The polyols which may be employed in the present invention are conventional macroglycols which are either polyether polyols, polyester polyols, or mixtures thereof. Like with the isocyanate component, the selection of the polyol or polyol mixture will depend upon the ultimate application. In automotive seating environments, polyethers, either diols, triols, or mixtures thereof, are among the highly preferred systems. Preferred polyols would be those having an average molecular weight of about 1000 to about 7,500, more preferably about 2000 to about 6000, with about 4000 to about 6000 being still more preferred.

Other conventional urethane foam system additives may be employed in the practice of the present invention. These include crosslinking agents, such as alkanolamines; polyurethane catalysts, such as tertiary amines; surfactants or other agents which promote the formation of uniform foam cells; chemical blowing agents; other fillers; flame retardants; and, of course, water. Other convention urethane foam system additives may also be employed along the basic components of the system provided they have no deleterious effect on the final cured fiber-reinforced foam or article.

Prepolymer mixtures may also be employed. For example, as noted below, a urea component may be used with a polyol or a mixture of polyols.

Because of the need and desirability of the urethane foam flowing freely and completely into the mold and fully encapsulate the reinforcing fibrous skeletal materials during curing, it has been observed that the Reactive Index [reflecting the stoichiometric ratio of: isocyanate: polyol (NCO:OH)] is extremely important in the processes of the present invention. Accordingly, in a preferred embodiment, this index is maintained in the range of about 90 to about 110; more preferably about 95-110; still more preferably in a range of about 105-110; and still more preferably in a range of about 105-108. It will be appreciated that this ratio is controlled as a means of controlling the viscosity of the polymer system in situ. Uncontrolled viscosity may cause the foam system to incompletely or unevenly surround the area of the cavity containing the preform.

The processes and methods of the present invention relate to the creation of an integral, reinforced urethane foam cushion article comprising;

(a) providing a urethane mold with at least one cavity having an anchor means for securing a preform and a vent means for allowing escape of a gas from said cavity;

(b) placing in said cavity a fibrous preform which has a thickness of at least about 10% of the average mold cavity thickness;

(c) anchoring said preform with said anchor means so that said preform resists movement during molding and so that said preform is adjacent said vent means;

(d) introducing a polyurethane foam mixture which has a Reactive Index of about 90 to about 110 into said mold;

(e) foaming said foam mixture in said cavity such that said foam substantially completely fills the voids or interstices of said fibrous preform and such that any excess foaming gas can escape via said vent means; and

(f) curing said foam and preform together.

It will be appreciated that the resulting roam article may then be treated like any conventional urethane roam article. For example, a seat cushion prepared according to the method described above may then be covered (either during molding or thereafter) with an upholstery material.

Useful formulations are as follows:

## USEFUL FOAM FORMULATIONS

### FORMULATION A

| System Component | | Part By Weight |
|---|---|---|
| Mobay 3900 | Ethylene oxide modified polypropylene glycol | 60 |
| Mobay 9151 | Polyurea filled polypropylene glycol | 40 |
| $H_2O$ | Water | 3.24 |
| U.CC. Deoalf | Alkanolamine Crosslinker | 1.76 |
| Air Products DABCO33LV | Tertiary amine catalyst | 0.50 |
| U.CC. A107 | Acid blocked tertiary Amine Catalyst | 0.25 |
| Air Products DABCO DC5043 | Surfactants | 1.5 |
| Mobay TD80 | Toluene Di-isocyanate | 100I (Amount needed to provide Reactive Index of 100.) |

### FORMULATION B

| | Part By Weight |
|---|---|
| Ethelene oxide modified polypropylene glycol | 0-85 |
| Filled polypropylene glycol containing polyurea or SAN polymer | 100-15 |
| Water | 2.2-4-5 |
| Alkanolamine Cross-Linker | 0.8-2.5 |
| Amine catalyst | 0.25-0.8 |
| Acid blocked amine catalyst | 0.20-0.7 |
| Surfactants | 0.6-2.0 |
| Toluene di-isocyanate (Index) | 100-110I |

## FORMULATION C

| Mobay 3901 | Ethylene oxide modified polypropylene glycol | 100 |
| --- | --- | --- |
| H$_2$O | Water | 3.5 |
| UCC A4 | Tertiary | 1.25 |
| UCC A1 | Tertiary amine | 0.25 |
| UCC A107 | Acid blocked tertiary amine | 0.15 |
| Mobay 7040 | Cell opener | 2.0 |
| Air Products DABCO | 33LV tertiary amine catalyst | 0.8 |
| Mobay 9932 | Cell opener | 2.0 |
| Air Products | DC5043 | 1.0 |
| MRS - 2 | Methylene Diphenyl Di-isocyanate | 100I |

It will be appreciated that articles typically made from low density urethane foam systems are bun-type devices or sheet-type materials which typically have a top, bottom and typically lateral sides. When the top and bottom create an even, rectilinear pattern, finding the average uncompressed thickness is not generally a problem. One simply measures the thickness.

However, when one manufactures a device, such as those in Figures 3A-8C, the "thickness" of the article varies and is therefore dependent upon where the measurement is taken. Accordingly, as used herein, the term "occupying at least 10% of the thickness" or an article means that at least 10% of (1) the maximum thickness of the article; or (2) the mean thickness of the article, is occupied (by the fibrous preform) when the article is in an uncompressed relaxed state. When only a portion of the article is reinforced, the term refers to the maximum thickness or mean thickness of the reinforced portion of the article.

It will further be appreciated that the average or "mean thickness" measurement can be obtained for irregular articles by taking at least three thickness measurements at evenly measured intervals across the foam article; the maximum is determined by taking the measurement at the thickest point.

For highly irregular shapes, more than 3 measurements may be necessary to obtain a statistically significant "mean thickness" value.

While the above specification describes the preferred embodiments, it is understood that the present invention is subject to modification and change without departing from the proper scope and fair meaning of the accompanying claims.

**Claims**

1. A process for preparing an integral, reinforced urethane foam cushion article comprising:
   (a) providing a urethane mold with at least one cavity having an anchor means for securing a preform and a vent means for allowing escape of a gas from said cavity;
   (b) placing in said cavity at leapt one fibrous preform which has a thickness of at least about 10% of the average mold cavity thickness;
   (c) anchoring said preform with said anchor means so that said preform resists movement during molding and so that said preform is adjacent said vent means;
   (d) introducing a polyurethane foam mixture which has a Reactive Index of about 90 to about 110 into said mold;

(e) foaming said foam mixture in said cavity such that said foam substantially completely fills the voids or interstices around said fibrous preform and such that any excess foaming gas can escape via said vent means; and

(f) curing laid foam and preform together.

2. A method according to claim 1 wherein said preform comprises a polyester.

3. A method according to claim 1 wherein said preform comprises polyethylene teraphthalate.

4. A method according to claim 1 wherein said foam mixture possess a Reactive Index or about 90 to about 110.

5. A method according to claim 4 wherein said mixture has a Reactive Index of about 100 to about 110.

*Fig-1*

*Fig-2*

34

32

36

[Fig-3A

32 38 34 38

[Fig-3B

36

34 32

[Fig-3C

36

68

72

70

_IFig-8c_

42    40

_IFig-4A_

42    46

_IFig-4B_

40

44    44    40

42

_IFig-4c_

*Fig-5B*

*Fig-5C*

*Fig-5A*

56

60

58

58

*Fig-6A*

60

64

64

*Fig-7B*

62    64

66

*Fig-7C*

66

64    62

64

66

*Fig-7A*

_IFig-6c_

_IFig-6B_

_IFig-8A_

_IFig-8B_

Fig-9

Fig-10

LOAD BEARING INCREASE

_/Fig-11_

LOAD BEARING INCREASE

_/Fig-12_

20

## DOCUMENTS CONSIDERED TO BE RELEVANT

EP 91104290.1

| Category | Citation of document with indication, where appropriate, of relevant passages | Relevant to claim | CLASSIFICATION OF THE APPLICATION (Int. Cl.5) |
|---|---|---|---|
| Y | <u>DE - B - 1 479 954</u> (ARTILAT) . <br> * Claims; fig. 1 * <br> -- | 1-5 | B 29 C 67/22 <br> B 32 B 5/28 <br> C 08 J 5/04// <br> //B 29 K 75:00 <br> B 29 K 105:04 <br> B 29 K 105:12 <br> B 29 L 31:58 |
| Y | <u>US - A - 4 269 889</u> (TAKAGI) <br> * Totality * <br> -- . | 1-5 | |
| D,Y | <u>US - A - 4 792 576</u> (NODELMANN) <br> * Abstract * <br> -- | 1-5 | |
| A | <u>DE - A1 - 2 917 739</u> (FUNCK) <br> * Page 7, lines 10-28; claims; fig. 1-4 * <br> -- | 1 | |
| A | <u>US - A - 3 382 302</u> (MARZOCCHI) <br> * Fig. 2,2A * <br> -- | 1 | |
| A | <u>EP - A1 - 0 019 748</u> (NISSHIN SPINNING) <br> * Totality * <br> -- | 1 | TECHNICAL FIELDS SEARCHED (Int. Cl.5) <br><br> A 47 C |
| A | <u>AT - B - 389 848</u> (DANUTEC) <br> * Totality * <br> -- | 1 | B 29 C <br> B 32 B <br> B 60 N <br> C 08 J |
| A | <u>US - A - 3 505 436</u> (KRUG) <br> * Totality * <br> -- | | |
| A | <u>DE - A - 2 132 284</u> (CONTRAVES) <br> * Totality * <br> ---- | | |

The present search report has been drawn up for all claims

| Place of search | Date of completion of the search | Examiner |
|---|---|---|
| VIENNA | 28-06-1991 | MAYER |

EPO FORM 1503 03.82 (P0401)